# EUROPÄISCHE PATENTANMELDUNG

(11) **EP 0 922 556 A1**
(43) Veröffentlichungstag der Anmeldung: **16.06.1999**
(21) Anmeldenummer: 97121248.5
(22) Anmeldetag: 03.12.1997
(51) Int. Cl.: B29C 45/17, B29C 45/16, B29C 45/04

(54) **Spritzgiessmaschine mit verschiebbaren Formen, Haltevorrichtung sowie Formträger für eine solche Spritzgiessmaschine**

(71) Anmelder: FOBOHA GmbH, D-77716 Haslach (DE)
(72) Erfinder: Bodmer, Werner, 77716 Haslach (DE); Armbruster, Rainer, 77709 Wolfach (DE)
(74) Vertreter: Frei, Alexandra Sarah

(57) **Zusammenfassung**

Die Haltevorrichtung (1) für Spritzgiessformhälften (61.2) oder deren Träger beinhaltet zwei Verschiebeeinheiten (2.1, 2.2), auf welchen je eine Dreheinheit (4.1, 4.2) angebracht ist. Auf jeder Dreheinheit (4.1, 4.2) befinden sich Haltemittel (5.1, 5.2). In den Abstand (d) zwischen den beiden Haltemitteln (5.1, 5.2) ist ein als prismatischer Drehblock ausgebildeter Formträger einsetzbar. Der Formträger in der Haltevorrichung (1) ist in einer Richtung (z) verschiebbar und um eine zu dieser Richtung (z) senkrechte, verschiebbare Achse (42.1, 42.2) drehbar. Die Verschiebeeinheiten (2.1, 2.2) sind relativ zueinander verschiebbar, so dass die Erfindung ein rasches, einfaches Auswechseln von Spritzgiessformen (62.1) ermöglicht.

## Beschreibung

Die Erfindung betrifft eine Haltevorrichtung für Formen, Formhälften oder Formträger in einer Spritzgiessmaschine, ferner einen Formträger, einsetzbar in diese Haltevorrichtung, ferner eine Spritzgiessmaschine, beinhaltend diese Haltevorrichtung, und ausserdem ein Verfahren zum Entfernen bzw. Einsetzen einer Form, Formhälfte oder eines Formträgers gemäss den Oberbegriffen der unabhängigen Patentansprüche.

Bekannte Spritzgiessmaschinen haben oft den Nachteil von hohen Rüst-/ oder Umrüstzeiten und -kosten, weil das Einsetzen, Entfernen oder Auswechseln von Formen kompliziert und zeitaufwendig ist. Die Form, Formhälfte bzw. ihr Träger ist ja bei den bekannten Spritzgiessmaschinen ein Teil der Maschine selbst; das bedeutet, dass bei einem Formwechsel ein Maschinenteil ausgewechselt werden muss. Dies wird durch die Tatsache erschwert, dass zwecks Kühlung, Hydraulikbetätigung etc. verschiedene Medien wie elektrischer Strom, Wasser (kalt und heiss), Öl (kalt und heiss), Luft und/oder andere Gase in die Spritzgiessform eingeleitet werden. Die entsprechenden Zu- und Abführleitungen sind an der Form bzw. den Formhälften angeschlossen; bei einem Formwechsel müssen sie von der alten Form gelöst und an der neuen Form befestigt werden. Diese Prozedur braucht Zeit und Arbeitskräfte. Der Einsatz herkömmlicher Spritzgiessmaschinen ist entsprechend kostspielig und wenig flexibel, wenn die Formen häufig gewechselt werden müssen. Moderne Spritzgiessbetriebe müssen jedoch in der Lage sein, Spritzgiessformen einfach und rasch auszuwechseln, um ihre Produktion sofort sich ändernden Kundenwünschen und anderen sich ständig ändernden Forderungen und Bedingungen anzupassen.

Für viele Anwendungen des Spritzgiessverfahrens ist es vorteilhaft, wenn die Spritzgiessform oder eine Hälfte derselben relativ zur Spritzgiessmaschine drehbar ist. Mit einer solchen drehbaren Form besteht z. B. die Möglichkeit, zu verarbeitende Schmelze (bspw. Kunststoffschmelze) aus mehreren (typischerweise zwei gegenüberliegenden) Einspritzstationen in die Form einzuspritzen. Damit können erstens gleichzeitig Formteile mit verschiedenen Geometrien, verschiedenen Farben oder aus verschiedenen Materialien hergestellt werden. Damit können zweitens auch Formteile aus mehreren Komponenten hergestellt werden (Mehrkomponentenverfahren), also Formteile, welche verschiedene Farben aufweisen oder aus mehreren Materialien bestehen (Montagespritzguss). Wenn nur eine Einspritzstation verwendet wird, bringt eine drehbare Form den Vorteil von schnelleren Zykluszeiten. Nach einem ersten Einspritzzyklus kann nämlich die Form gedreht werden, und die soeben engespritzten Formteile können abkühlen und ausgestossen werden, während bereits ein zweiter Einspritzzyklus stattfindet. Bei drehbaren Formen stehen mehr Kavitäten zur Verfügung als bei nichtdrehbaren Formen. Ausserdem erlauben drehbare Formen Zwischenstationen für verschiedene Optionen

Spritzgiessmaschinen mit drehbaren Formen oder Formhälften sind bekannt. So offenbart bspw. das Patent US-4,330,257 eine Spritzgiessmaschine mit zwei relativ zueinander beweglichen Formaufspannplatten und einem dazwischenliegenden Kernträgerkörper, welcher mindestens vier Seitenflächen hat und um eine Achse senkrecht zur Bewegungsrichtung der Formaufspannplatten drehbar ist. Auf beiden Formaufspannplatten befinden sich erste Formhälften mit formgebenden Hohlräumen; die Seitenflächen des Kernträgerkörpers sind mit fingerartigen Ausformungen versehen und bilden zusammen mit diesen Fingern zweite Formhälften. Werden die beiden Formaufspannplatten gegen den Kernträgerkörper gepresst, so werden die ersten und zweiten Formhälften zu Formen zusammengefügt, in welche aus zwei Einspritzstationen Schmelze eingespritzt wird. Die so entstandenen Formteile werden auf den Fingern aus den Hohlräumen entfernt.

Die Patentschrift DE-36 20 175 offenbart eine Spritzgiessmaschine mit mindestens zwei Plastifizier- und Einspritzeinheiten und zwei Formaufspannplatten. Die eine Formaufspannplatte ist fest, die andere auf Holmen verschiebbar. Zwischen den Formaufspannplatten befindet sich ein drehbarer und ebenfalls verschiebbarer prismatischer Kernträgerkörper. Auf den Formaufspannplatten befinden sich erste, auf dem Kernträgerkörper zweite Formhälften der Spritzgiessformen. Durch Verschieben der verschiebbaren Formaufspannplatte und des Kernträgerkörpers werden die ersten und zweiten Formhälften zu einer Spritzgiessform zusammengefügt.

Bei solchen Spritzgiessmaschinen mit drehbaren Formen oder Formhälften macht sich der Nachteil der hohen Umrüstzeiten wegen schwer auswechselbarer Formen besonders deutlich bemerkbar. Die Formen oder Formhälften sind jeweils mit einem Drehmechanismus verbunden, dessen Entfernung von den Formen oder Formhälften den Formwechsel zusätzlich erschwert.

Es ist Aufgabe der vorliegenden Erfindung, eine Haltevorrichtung für eine Form, Formhälfte oder einen Formträger in einer Spritzgiessmaschine zu schaffen, welche die Rüst- und Umrüstzeiten massgeblich verkürzt, welche also ein einfaches und rasches Entfernen, Einsetzen bzw. Auswechseln der Form, Formhälfte oder des Formträgers ermöglicht. Ferner soll ein in diese Haltevorrichtung einsetzbarer Formträger geschaffen werden. Ferner soll eine Spritzgiessmaschine geschaffen werden, welche die obigen Nachteile nicht aufweist und bei welcher insbesondere kurze Rüst- und Umrüstzeiten möglich sind. Ausserdem soll ein Verfahren zum einfachen und raschen Entfernen, Einsetzen bzw. Auswechseln der Form, Formhälfte oder des Formträgers angegeben werden.

Die Aufgabe wird gelöst durch die erfindungsgemässe Haltevorrichtung, den erfindungsgemässen Formträger, die erfindungsgemässe Spritzgiessmaschine, und die erfindungsgemässen Verfahren, wie sie durch die unabhängigen Patentansprüche definiert sind.

Die Erfindung bricht mit dem herkömmlichen Konzept, gemäss welchem die Spritzgiessform bzw. ihr Träger ein Bestandteil der Spritzgiessmaschine selbst ist. Stattdessen betrachtet sie die Spritzgiessform, die Formhälfte bzw. ihren Träger als Modul, welches in die Spritzgiessmaschine eingesetzt werden und beliebig ausgewechselt werden kann. Zu diesem Zweck wird eine Haltevorrichtung für mindestens eine Form, Formhälfte oder einen Formträger in einer Spritzgiessmaschine geschaffen. Diese Haltevorrichtung weist mindestens zwei relativ zueinander verschiebbare und eventuell drehbare Haltevorrichtungen zum lösbaren Einspannen der Form, Formhälfte oder des Formträgers auf. Die Haltevorrichtung, nicht die Form selbst, ist ein Bestandteil der Spritzgiessmaschine. An der erfindungsgemässen Haltevorrichtung sind alle benötigten Medienleitungen fest angeschlossen. Hingegen können verschiedene Spritzgiessformen ohne Aufwand in Haltemittel der Haltevorrichtung eingesetzt und wieder ausgewechselt werden. Die verlustlose Übergabe der verschiedenen Medien von der Haltevorrichtung in die Form und umgekehrt ist durch normierte Schnittstellen gewährleistet.

Eine bevorzugte Ausführungsform der erfindungsgemässen Haltevorrichtung beinhaltet zwei Verschiebeeinheiten, auf welchen je eine Dreheinheit angebracht ist. Auf jeder Dreheinheit befinden sich Haltemittel für Formen, Formhälften oder deren Träger. Die Verschiebeeinheiten sind relativ zueinander in einer Richtung verschiebbar, bspw. auf je zwei zueinander parallelen Holmen. Jede Dreheinheit ist derart auf der jeweiligen Verschiebeeinheit drehbar befestigt, dass sie mit der Verschiebeeinheit verschiebbar und um eine mit der Verschiebeeinheit verschiebbare, zur Verschieberichtung senkrechten Achse drehbar ist Die Haltemittel sind derart an den Verschiebeeinheiten angebracht, dass sie einander gegenüberliegen, ihre Achsen zusammenfallen und die Haltemittel einen bestimmten Abstand voneinander aufweisen, wenn sich die zwei Verschiebeeinheiten in einer bestimmten gegenseitigen Lage befinden. In dieser einen bestimmten gegenseitigen Lage kann in den Abstand zwischen den beiden Haltemitteln eine Form, eine Formhälfte oder ein Formträger reversibel eingespannt werden.

Die in die erfindungsgemässe Haltevorrichtung eingesetzte Form, die Formhälfte oder der Formträger in der Haltevorrichtung kann in einer Richtung verschoben und um eventuell eine zu dieser Richtung senkrechte, verschiebbare Achse gedreht werden. Die Verschiebung der Haltevorrichtung kann mittels bspw. hydraulischer und/oder elektrischer Antriebsmittel betätigt und mit Kontroll- oder Steuermitteln kontrolliert oder gesteuert werden Die Drehung der Haltemittel kann mittels bspw. Drehantriebsmittel betätigt und mit Drehkontroll- oder Drehsteuermitteln kontrolliert oder gesteuert werden.

Ein erfindungsgemässer Formträger ist vorzugsweise als prismatischer Drehblock ausgebildet, dessen beiden Grundflächen den beiden Haltemitteln zugewandt sind. Der Drehblock weist mindestens zwei Seitenflächen auf, wobei mindestens eine Seitenfläche eine Spritzgiessform oder eine Spritzgiessformhälfte trägt.

Die erfindungsgemässe Haltevorrichtung wird vorzugsweise zwischen zwei Formaufspannplatten einer Spritzgiessmaschine eingesetzt. Dabei ist vorzugsweise eine Formaufspannplatte fest mit der Maschine verbunden, die andere Formausfspannplatte in derselben Richtung wie die Verschiebeeinheiten der Haltevorrichtung verschiebbar. Die Formaufspannplatten tragen je eine erste Formhälfte. Mindestens eine, vorzugsweise aber zwei oder mehr Seitenflächen des prismatischen Drehblocks tragen zweite Formhälften. Erste und/oder zweite Formhälften sind mit formgebenden Hohlräumen ausgestattet. Wenn die Formaufspannplatten gegen den Drehblock gepresst werden, fügen sich die ersten und zweiten Formhälften zu Spritzgiessformen zusammen, in welche aus Einspritzstationen Schmelze eingespritzt werden kann.

Zum Entfernen einer Form, Formhälfte oder eines Formträgers aus der erfindungsgemässen Haltevorrichtung werden die Haltemittel relativ zueinander so weit verschoben, dass sie die Form, Formhälfte oder den Formträger freigeben. Daraufhin wird die Form, Formhälfte oder der Formträger aus der Haltevorrichtung entnommen.

Zum Einsetzen einer Form, Formhälfte oder eines Formträgers in die erfindungsgemässe Haltevorrichtung werden die Haltemittel relativ zueinander so weit verschoben, dass sie einen das Einsetzen der Form, Formhälfte oder des Formträges erlaubenden Abstand voneinander aufweisen. Die Form, Formhälfte oder der Formträger wird in die Haltevorrichtung eingesetzt. Daraufhin werden die Haltemittel relativ zueinander in die eine bestimmte gegenseitige Lage verschoben, so dass sie die Form, Formhälfte oder den Formträger einspannen.

Die erfindungsgemässe Haltevorrichtung lässt sich in bereits bestehende Spritzgiessmaschinen einbauen. Sie weist sowohl die Vorteile der bekannten Spritzgiessmaschinen mit drehbaren Formen als auch den Vorteil des einfachen Formwechsels auf.

Im folgenden wird eine bevorzugte Ausführungsform der erfindungsgemässen Haltevorrichtung innerhalb eines Teils einer Spritzgiessmaschine anhand von Figuren detailliert beschrieben. Dabei zeigen:
- Fig. 1: eine Draufsicht auf eine erste Ausführungsform der erfindungsgemässen Haltevorrichtung innerhalb eines Teils einer Spritzgiessmaschine,
- Fig. 2: eine Frontalansicht der Haltevorrichtung von Fig. 1,
- Fig. 3: eine teilweise geschnittene Frontalansicht einer zweiten Ausfühtungsform der erfindungsgemässen Haltevorrichtung und
- Fig. 4: eine Draufsicht auf einen Teil der Haltevorrichtung von Fig. 3.

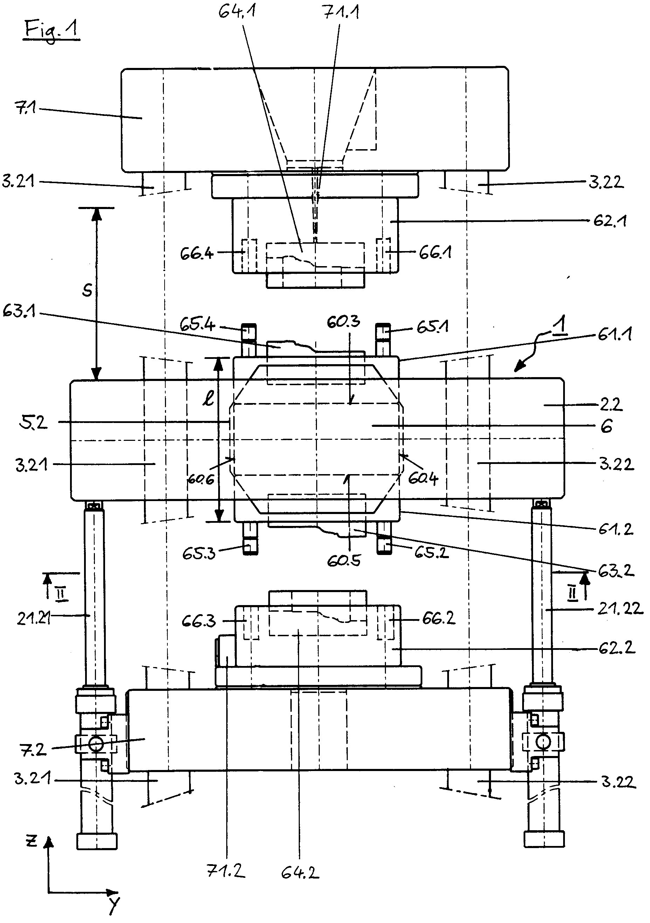

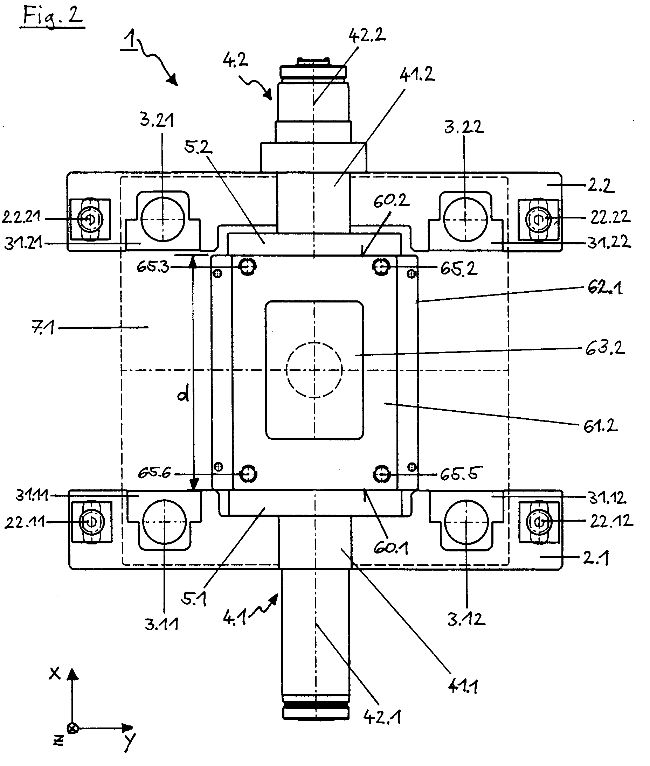

Die in den **Figuren 1 und 2** dargestellte Ausführungsform der erfindungsgemässen Haltevorrichtung 1 beinhaltet eine erste Verschiebeeinheit 2.1 und eine zweite Verschiebeeinheit 2.2. Die Verschiebeeinheiten 2.1, 2.2 sind bspw. als Metallplatten ausgebildet. Sie werden von je zwei zueinander parallelen Holmen 3.11, 3.12, 3.21, 3.22 getragen und sind auf diesen mit Hilfe von Führungen 31.11, 31.12, 31.21, 31.22, bspw. zylindrischen Gleitführungen, linear geführt, so dass sie parallel zueinander in einer Richtung z verschiebbar sind. Die Verschiebung kann durch (nicht dargestellte) Kontroll- oder Steuermittel wie hydraulische, mechanische oder elektronische Wegmesssysteme, Endschalter etc. kontrolliert und/oder gesteuert werden.

Auf der ersten Verschiebeeinheit 2.1 ist eine erste Dreheinheit 4.1 und an der zweiten Verschiebeeinheit 2.2 ist eine zweite Dreheinheit 4.2 befestigt. Jede Dreheinheit 4.1, 4.2 ist mit der jeweiligen Verschiebeeinheit 2.1, 2.2 verschiebbar; mindestens ein Teil einer jeden Dreheineheit 4.1, 4.2, bspw. eine Welle 41.1, 41.2, ist um eine mit der Verschiebeeinheit 2.1, 2.2 verschiebbare, zur Verschieberichtung z senkrechten Achse 42.1, 42.2 drehbar. Die Drehung der Dreheinheiten 4.1, 4.2 kann bspw. hydraulisch und/oder elektrisch betätigt werden, bspw. mit (nicht eingezeichneten) Drehantriebsmitteln wie einer Hydraulik oder einem Servomotor. Die Drehantriebsmittel können auf einer einzigen Verschiebeeinheit 2.2 oder auch auf beiden Verschiebeeinheiten 2.1, 2.2 angebracht sein. Zwischen den Drehantriebsmitteln und der Dreheinheit 4.1, 4.2 kann ein Getriebe und/oder eine Kupplung (nicht dargestellt) vorgesehen sein. Die Drehung der Dreheinheiten 4.1, 4.2 kann mit Hilfe von (nicht dargestellten) Drehkontroll- oder Drehsteuermitteln wie Drehgebern, Endschaltern etc. kontrolliert und/oder gesteuert werden.

An den Dreheinheiten 4.1, 4.2, bspw. an den einen Enden der Wellen 41.1, 41.2, sind Haltemittel 5.1, 5.2 für erste Formhälften 61.1, 61.2 oder Formträger 6 befestigt. Die Haltemittel 5.1, 5.2 können bspw. als Trägerplatten mit entprechenden (nicht detailliert dargestellten) reversiblen Befestigungsmitteln ausgebildet sein. Die Verschiebeeinheiten 2.1, 2.2 sind derart gegenseitig angeordnet bzw. verschiebbar, dass in einer bestimmten gegenseitigen Lage der Verschiebeeinheiten 2.1, 2.2 die beiden Dreheinheiten 4.1, 4.2 einander gegenüberliegen, ihre Achsen 42.1, 42.2 zusammenfallen und die beiden Haltemittel 5.1, 5.2 einen bestimmten Abstand d voneinander aufweisen. Die Figuren 1-4 zwigen die Verschiebeeinheiten 2.1, 2.2 in dieser einen bestimmten gegenseitigen Lage.

In den Abstand d zwischen den beiden Haltemittein 5.1, 5.2 ist ein prismatischer Drehblock 6 eingesetzt. In diesem Ausführungsbeispiel hat der Drehblock 6 die Form eines Würfels mit zwei Grundflächen 60.1, 60.2 und vier (nicht notwendigerweise gleich grossen) Seitenflächen 60.3-60.6; er könnte jedoch auch eine andere, vorzugsweise gerade Anzahl Seitenflächen aufweisen. Die beiden Grundflächen 60.1, 60.2 des Drehblocks 6 sind den beiden Dreheinheiten 4.1, 4.2 zugewandt. Der Drehblock 6 in der Haltevorrichung 1 kann in einer Richtung z verschoben und um eine zu dieser Richtung z senkrechte, verschiebbare Achse gedreht werden; diese Achse ist durch die zusammenfallenden Achsen 42.1, 42.2 der Dreheinheiten 4.1, 4.2 definiert. Wenn der Drehblock 6 eingesetzt ist, verbindet er die beiden Dreheinheiten 4.1, 4.2 drehfest miteinander; deshalb genügt ein einziges Drehantriebsmittel zur Drehung beider Dreheinheiten 4.1, 4.2 und des Drehblocks 6.

Das Öffnen der erfindungsgemässen Haltevorrichtung 1 geschieht beispielsweise, indem die zweite, obere Verschiebeeinheit 2.2 gegenüber der den Drehblock 6 tragenden ersten, unteren Verschiebeeinheit 2.1 eine genügend grosse Wegstrecke s weit verschoben wird. Genügend gross heisst, dass die Wegstrecke s grösser sein muss als die Lange l des Drehblocks 6, d. h. s > l. Ein solcher verschobener oder offener Zustand der Haltevorrichtung 1 erlaubt einen schnellen und einfachen Ausbau bzw. Wechsel des Drehblocks 6.

Zum Einspannen des Drehblocks 6 kann bspw. die zweite, obere Dreheinheit 4.2 wie ein Stempel in x-Richtung beweglich sec Zum Entfernen des Drehblocks 6 wird die zweite Dreheinheit 4.2 zunächst eine kleine Wegstrecke nach oben, in +x-Richtung, gefahren; dann wird die zweite Verschiebeeinheit 2.2 bspw. in + z-Richtung verschoben und der Drehblock 6 entfernt. Zum Einsetzen des Drehblocks 6 wird der Drehblock auf das erste Haltemittel 5.1 aufgesetzt, die zweite Verschiebeeinheit 2.2 durch Verschieen bspw. in -z-Richtung in die eine bestimmte Lage mit der ersten Verschiebeeinheit 2.1 gebracht, so dass die Achsen 42.1, 42.2 zusammenfallen, und die zweite Dreheinheit 4.2 nach unten, in -x-Richtung, gesenkt, bis der Drehblock 6 fest eingespannt ist.

Die erfindungsgemässe Haltevorrichtung 1 wird vorzugsweise zwischen zwei Formaufspannplatten 7.1, 7.2 einer (weiter nicht dargestellten) Spritzgiessmaschine eingesetzt. Dabei ist vorzugsweise eine Formaufspannplatte 7.1 fest mit der Maschine verbunden, die andere Formausfspannplatte 7.2 durch die Holmen 3.11, 3.12, 3.21, 3.22 linear geführt und in derselben Richtung z wie die Verschiebeeinheiten 2.1, 2.2 der Haltevorrichtung 1 verschiebbar. Diese Verschiebung wird durch (nicht dargestellte) Antriebsmittel bewirkt. Die Verschiebeeinheiten 2.1, 2.2 sind mittels hydraulischer, mechanischer oder elektritscher Antriebsmittel 21.11, 21.12 (nicht sichtbar) und 21.21, 21.22 gegenüber der verschiebbaren Formaufspannplatte 7.2 verschiebbar; die Antriebsmittel 21.11, 21.12, 21.21, 21.22 greifen an Angriffsstellen 22.11, 22.12, 22.21, 22.22 an den Verschiebeeinheiten 2.1, 2.2 an. Die Verschiebung der Verschiebeeinheiten 2.1, 2.2 wird hydraulisch, mechanisch oder elektrisch betätigt und mit einem (nicht dargestellten) hydraulischen, mechanischen oder elektronischen Wegmesssystem kontrolliert oder gesteuert. Das Wegmesssystem sorgt dafür, dass bei eingespanntem Drehblock 6 die an derselben Verschiebeeinheit 2.1 bzw. 2.2 angreifenden Antriebsmittel 21.11, 21.12 bzw. 21.21, 21.22 stets gleichzeitig und parallel zueinander wirken. Die beiden Verschiebeeinheiten 2.1, 2.2 sind jedoch unabhängig voneinander ansteuerbar und verschiebbar, um ein schnelles Auswechseln des Drehblocks zu ermöglichen.

Mindestens eine, vorzugsweise aber zwei oder mehr Seitenflächen 60.3, 60.5 des prismatischen Drehblocks 6 tragen mindestens eine erste Formhälfte 61.1, 61.2 mit je einem ersten Formeinsatz 63.1, 63.2; der prismatische Drehblock 6 dient also als Formträger. Die Formautspannplatten 2.1, 2.2 tragen je eine zweite Formhälfte 62.1, 62.2 mit je einem zweiten Formeinsatz 64.1, 64.2. Erste Formeinsätze 63.1, 63.2 und/oder zweite Formeinsätze 64.1, 64.2 sind mit (in Fig 1 und 2 nicht dargestellten) formgebenden Hohlräumen ausgestattet. Wenn die Formaufspannplatten 7.1, 7.2 mit Hilfe der Antriebsmittel gegen den Drehblock 6 gepresst werden, fügen nich ersten und zweiten Formhälften 61.1, 61.2, 62.1, 62.2 bzw. Formeinsätze 63.1, 63.2, 64.1, 64.2 zu Spritzgiessformen zusammen, in welche aus Einspritzstationen 71.1, 71.2 Schmelze eingespritzt werden kann. Zur eindeutigen gegenseitigen Positionierung der ersten und zweiten Formhälften 61.1, 61.2, 62.1, 62.2 sind diese vorzugsweise mit Führungen, bspw. Zylinderstiften 65.1-6 und entsprechenden Bohrungen 66.1-4, ausgestattet.

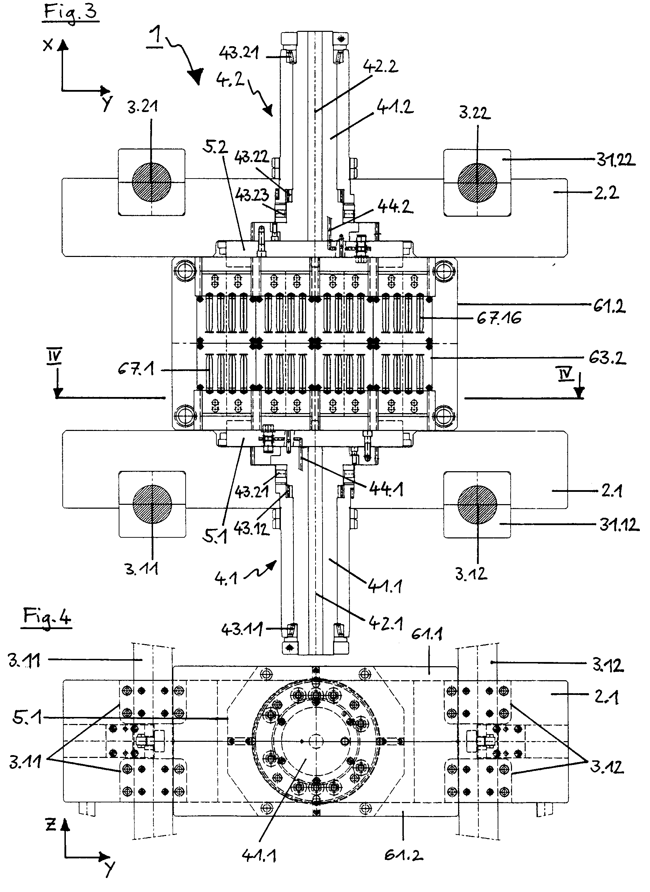

**Figur 3** zeigt eine Frontalansicht einer Ausführungsform der erfindungsgemässen Haltevorrichtung, welche von derjenigen der Figuren 1 und 2 leicht verschieden ist. **Figur 4** zeigt eine Draufsicht auf einen Teil der Haltevorrichtung von Fig. 3. In dieser Ausführungsform sind die Linearführungen 31.11, 31.12, 31.21, 31.22 für die Holmen 3.11, 3.12, 3.21, 3.22 an Aussenseiten 23.1, 23.2 der Verschiebeeinheiten 2.1, 2.2 angebracht. Die Dreheinheiten 4.1, 4.2 sind mittels Lager 43.11-13, 43.21-23 auf den jeweiligen Verschiebeeinbeiten 2.1, 2.2 drehbar gelagert.

Durch entsprechende Kanäle oder Leitungen 44.1, 44.2 in der ersten Welle 41.1 und/oder der zweiten Welle 41.2 werden Medien wie Gase, Flüssigkeiten oder elektrischer Strom zum Drehblock 6 geführt. Dabei ist es vorteilhaft, Fluide wie Gase und/oder Flüssigkeiten durch die erste, unten angebrachte Welle 41.1 und den elektrischen Strom durch die zweite, oben angebrachte Weile 41.2 zu führen, um unerwünschte elektrische Kontakte und Verunreinigungen bei Lecks zu vermeiden Zwischen den Haltemitteln 5.1, 5.2 und dem Drehblock 6 sind (nicht dargestellte) normierte Schnittstellen für die Übergabe der Medien vorgesehen. In der offenen Formhälfte 61.2 sind formgebenden Hohlräume 67.1-16 für die Aufnahme von Schmelze sichtbar.

Die Erfindung ermöglicht dem Fachmann auch die Realisierung anderer Ausführungsformen, als hier beschrieben sind. So könnten die Haltemittel 5.1, 5.2 bspw. in x-Richtung relativ zueinander verschiebbar sein.

## Patentansprüche

1. Haltevorrichtung (1) für mindestens eine Form, Formhälfte (61.1, 61.2) oder einen Formträger (6) in einer Spritzgiessmaschine, **gekennzeichnet durch** mindestens zwei Haltemittel (5.1, 5.2) zum lösbaren Einspannen der mindestens einen Form, Formhälfte (61.1, 61.2) oder des Formträgers (6), wobei die mindestens zwei Haltemittel (5.1, 5.2) relativ zueinander verschiebbar sind.

2. Haltevorrichtung (1) nach Anspruch 1, **dadurch gekennzeichnet,** dass sie zwei Verschiebeeinheiten (2.1, 2.2) aufweist, welche relativ zueinander in einer Richtung (z) verschiebbar sind, und dass an jeder der zwei Verschiebeeinheiten (2.1, 2.2) ein Haltemittel (5.1, 5.2) derart angebracht ist, dass die mindestens eine Form, Formhälfte (61.1, 61.2) oder der Formträger (6) zwischen den Haltemitteln (5.1, 5.2) reversibel einspannbar ist, wenn sich die zwei Verschiebeeinheiten (2.1, 2.2) in einer bestimmten gegenseitigen Lage befinden.

3. Haltevorrichtung (1) nach Anspruch 1 oder 2, **dadurch gekennzeichnet,** dass mindestens ein Haltemittel (5.1, 5.2) um eine verschiebbare Achse (42.1, 42.2) drehbar ist.

4. Haltevorrichtung (1) nach den Ansprüchen 2 und 3, **dadurch gekennzeichnet,** dass auf jeder Verschiebeeinheit (2.1, 2.2) eine Dreheinheit (4.1, 4.2) angebracht ist, welche mit der jeweiligen Verschiebeeinheit (2.1, 2.2) verschiebbar und um eine mit der jeweiligen Verschiebeeinheit (2.1, 2.2) verschiebbare, zur Verschieberichtung (z) senkrechten Achse (42.1, 42.2) drehbar ist, und dass die Haltemittel (5.1, 5.2) auf je einer Dreheinheit (4.1, 4.2) befestigt sind.

5. Haltevorrichtung (1) nach Anspruch 4, **dadurch gekennzeichnet,** dass die Verschiebeeinheiten (2.1, 2.2) in eine bestimmte gegenseitige Lage verschiebbar sind, in welcher die Dreheinheiten (4.1, 4.2) einander gegenüberliegen, ihre Achsen (42.1, 42.2) zusammenfallen und die Haltemittel (5.1, 5.2) einen bestimmten Abstand (d) voneinander aufweisen.

6. Haltevorrichtung (1) nach Anspruch 2, **dadurch gekennzeichnet,** dass die Verschiebeeinheiten (2.1, 2.2) auf parallel zueinander verlaufenden Holmen (3.11, 3.12, 3.21, 3.22) geführt sind.

7. Haltevorrichtung (1) nach einem der Ansprüche 1-6, **gekennzeichnet durch** Antriebsmittel (21.21, 21.22) zur Verschiebung der Haltemittel (5.1, 5.2) relativ zueinander oder relativ zu einem Teil (7.2) der Spritzgiessmaschine.

8. Haltevorrichtung (1) nach einem der Ansprüche 1-7, **gekennzeichnet durch** Kontroll- oder Steuermittel zur Kontrolle und/oder Steuerung der Verschiebung.

9. Haltevorrichtung (1) nach einem der Ansprüche 3-8, **gekennzeichnet durch** Drehantriebsmittel zur Drehung mindestens eines Haltemittels (5.1, 5.2) um eine verschiebbare Achse (42.1, 42.2).

10. Haltevorrichtung (1) nach einem der Ansprüche 3-9, **gekennzeichnet durch** Drehkontroll- oder Drehsteuermittel zur Kontrolle und/oder Steuerung der Drehung.

11. Formträger (6), einsetzbar in die Haltevorrichtung (1) nach einem der Ansprüche 1-10, **dadurch gekennzeichnet,** dass er als prismatischer Körper mit zwei Grundflächen (60.1, 60.2) und mehr als zwei Seitenflächen (60.3-60.6) ausgebildet ist, und dass mindestens eine Seitenfläche (60.3, 60.5) eine Spritzgiessform oder eine Spritzgiessformhälfte (61.1, 61.2) trägt.

12. Formträger (6) nach Anspruch 11, **dadurch gekennzeichnet,** dass er als Würfel mit zwei Grundflächen (60.1, 60.2) und vier Seitenflächen (60.3-60.6) ausgebildet ist.

13. Spritzgiessmaschine, beinhaltend die Haltevorrichtung (1) nach einem der Ansprüche 2-10, **dadurch gekennzeichnet,** dass sie zwei Formaufspannplatten (7.1, 7.2), von denen eine Formaufspannplatte (7.1) fest mit der Maschine verbunden, die andere Formausfspannplatte (7.2) in derselben einen Richtung (z) wie die Haltemittel (5.1, 5.2) der Haltevorrichtung (1) verschiebbar ist, aufweist, und dass die Haltevorrichtung (1) zwischen den beiden Formaufspannplatten (7.1, 7.2) verschiebbar angebracht ist.

14. Spritzgiessmaschine nach Anspruch 13, beinhaltend einen Formträger (6) nach Anspruch 11 oder 12, **dadurch gekennzeichnet,** dass der Formträger (6) mindestens eine erste Formhälfte (61.1, 61.2) mit je einem ersten Formeinsatz (63.1, 63.2) trägt, dass die Formaufspannplatten (7.1, 7.2) je eine zweite Formhälfte (62.1, 62.2) mit je einem zweiten Formeinsatz (64.1, 64.2) tragen, und dass sich die ersten und zweiten Formhälften bzw. Formeinsätze zu Spritzgiessformen, in welche aus Einspritzstationen (71.1, 71.2) Schmelze einspritzbar ist, zusammenfügen, wenn die Formaufspannplatten (7.1, 7.2) gegen den Formträger gepresst werden.

15. Verfahren zum Entfernen einer Form, Formhälfte (61.1, 61.2) oder eines Formträgers (6) aus einer Haltevorrichtung (1) nach einem der Ansprüche 1-10, **dadurch gekennzeichnet,** dass die Haltermittel (5.1, 5.2) relativ zueinander so weit verschoben werden, dass sie die Form, Formhälfte (61.1, 61.2) oder den Formträger (6) freigeben und dass die Form, Formhälfte (61.1, 61.2) oder der Formträger (6) aus der Haltevorrichtung (1) entnehmbar ist.

16. Verfahren zum Einsetzen einer Form, Formhälfte (61.1, 61.2) oder eines Formträgers (6) in eine Haltevorrichtung (1) nach einem der Ansprüche 2-10, **dadurch gekennzeichnet,** dass die Haltemittel (5.1, 5.2) relativ zueinander so weit verschoben werden, dass sie einen das Einsetzen der Form, Formhälfte (61.1, 61.2) oder des Formträgers (6) erlaubenden Abstand (s) voneinander aufweisen, dass die Form, Formhälfte (61.1, 61.2) oder der Formträger (6) in die Haltevorrichtung (1) eingesetzt wird und dass daraufhin die Haltemittel (5.1, 5.2) relativ zueinander in die eine bestimmte gegenseitige Lage verschoben werden, so dass sie die Form, Formhälfte (61.1, 61.29 oder den Formträger (6) einspannen.
